# EUROPÄISCHE PATENTSCHRIFT

(11) **EP 2 302 242 B1**
(45) Veröffentlichungstag und Bekanntmachung des Hinweises auf die Patenterteilung: **11.11.2015**
(21) Anmeldenummer: 10010258.1
(22) Anmeldetag: 23.09.2010
(51) Int. Cl.: F16C 25/06, F16C 39/02

(54) **Verfahren und Vorrichtung zur Konditionierung von Lagersystemen für Wellen**
Method and device for conditioning bearing systems for shafts
Procédé et dispositif de conditionnement de systèmes de palier pour arbres

(30) Priorität: 24.09.2009 DE 102009042474; 07.05.2010 DE 102010019677
(43) Veröffentlichungstag der Anmeldung: 30.03.2011
(73) Patentinhaber: Mehnert, Jens, 08468 Heinsdorfergrund (DE)
(72) Erfinder: Mehnert, Jens, 08468 Heinsdorfergrund (DE)
(74) Vertreter: Steiniger, Carmen

(56) Entgegenhaltungen:
- DE-A1- 10 058 757
- US-A1- 2002 076 127

## Beschreibung

Die Erfindung bezieht sich auf ein Verfahren zur Konditionierung von Lagersystemen für Wellen nach dem Oberbegriff des Anspruchs 1 sowie eine Vorrichtung für eine verfahrensgemäße Umsetzung, wie sie beispielsweise zur Lagerung der Hauptspindel einer Werkzeugmaschine eingesetzt werden kann.

Dem Fachmann auf dem Gebiet der Wälzlagertechnik ist bekannt, dass zur Führung und Abstützung eines umlaufenden Maschinenteils, wie beispielsweise einer Welle, zumindest zwei in bestimmten Abständen voneinander angeordnete Lager erforderlich sind. Erfolgt dabei die Abstützung der Welle mit zwei Radiallagern tritt das Problem auf, dass die Abstände der Lagersitze auf der Welle und im Gehäuse nur innerhalb der jeweils erzielbaren Fertigungstoleranzen übereinstimmen. Außerdem erwärmt sich die Welle unter Betriebsbedingungen in der Regel stärker als das Gehäuse, so dass auch die temperaturbedingten Längendifferenzen der Welle in den Lagerstellen sowie unterschiedliche wärmebedingte Durchmesseränderungen der Lagerringe ausgeglichen werden müssen. Daher kann die Welle in axialer Richtung durch ein Festlager geführt werden, während das andere Lager als Loslager die dargestellten geometrischen Änderungen zu einem gewissen Anteil ausgleicht. Die Forderungen aus dem Maschinenbau zielen zusätzlich auf breite Drehmoment- und Drehzahlbereiche ab, um beispielsweise die Schrupp- und die anschließende Schlichtbearbeitung in einer Aufspannung durchführen zu können. In der Folge muss die Welle mit den sie aufnehmenden Lagereinheiten sowohl große Drehmomente mit zusätzlichen veränderlichen Krafteintrag durch die Bearbeitungskräfte als auch hohe Drehzahlen unter Beibehaltung der vorgegebenen Toleranzen gewährleisten, ohne dass Eigenschwingungen der Welle das Bearbeitungsergebnis beeinflussen.

In DE 101 63 089 C1 wird eine Motorspindel mit Stellelement offenbart. Im Mittelpunkt dieser Erfindung steht eine verschiebbare Lagerbüchse, welche mit Hilfe einer pneumatischen oder hydraulischen Einrichtung betätigt wird, um die Steifigkeit der Motorspindel durch Änderung der Lagervorspannung verändern zu können. Ziel dieser Erfindung ist es, die Nebenzeiten beim Werkzeug- oder Werkstückwechsel zu vermindern. Die in dieser Patentschrift offenbarte Ausführungsform ist sehr aufwändig in der Bauart, da zur Einstellung der Steifigkeit eine Lagerbüchse mit Stellelement (hydraulisch oder pneumatisch betätigt) und zusätzliche Sensoren zur Überwachung der eingestellten Parameter erforderlich sind.

In EP 1 387 736 B1 werden eine Motorspindel mit verbesserter Bearbeitungsgenauigkeit sowie ein Verfahren zum Betrieb einer derartigen Motorspindel offenbart. Diese Patentschrift stellt eine Weiterentwicklung der in o.g. DE 101 63 089 C 1 beschriebenen Erfindung dar. Im Unterschied nutzt diese Erfindung jedoch elektrorheologische oder magnetorheologische Flüssigkeiten für die Stelleinheit, wodurch die Stellglieder zur Änderung der Lagervorspannung in verbesserter Weise positionierbar sind.

In DE 10 2006 059 947 A1 wird eine Tandem-Lageranordnung mit einer Vorrichtung zum Ausgleich temperaturbedingter Lagerverspannungen beschrieben. Die darin offenbarte Lagerungsgestaltung stellt eine Lösung zur Verringerung temperaturbedingter Lagerverspannungen dar. Eine während des Wellenbetriebes an den jeweils eingestellten Belastungszustand angepaßte Lagervorspannung ist nicht vorgesehen. Ähnliche Aufgabenstellungen werden in DE 10 2005 043 945 A1 und DE 10 2005 009 921 A1 mit vergleichbaren konstruktiven Gestaltungen der Wälzlager beschrieben.

In Die 103 08 442 B3 wird eine Vorrichtung zum spanabhebenden Bearbeiten einer Bohrung beschrieben. Die Lagerung der Welle erfolgt dabei durch Magnetlager mit dem Ziel, herstellungsprozessbedingte Bewegungen durch Auslenkung der Welle in den Magnetlagern umzusetzen.

In DE 40 00 025 C 2 wird eine Vorrichtung zur spanabhebenden Bearbeitung der Oberflächen von der genauen Zylinderform abweichenden Werkstücken beschrieben. Zur Lösung dieser Aufgabe findet eine hydraulische Einrichtung zur Auslenkung der Werkzeugschneide Verwendung.

Die Druckschrift DE 100 58 757 A1 beschreibt eine wälzgelagerte Galette zum Fördern, Verstrecken oder Temperieren von schmetzgesponnenen Fäden. Die Galette weist eine Antriebswelle auf, die mittels Lagern drehbar in einem Lagergehäuse gelagert ist. Zwischen den Lagern und dem Lagergehäuse ist ein Aktor vorgesehen. Eine Ausdehnung des Aktors in axialer Richtung führt zu einem Anstieg der Vorspannkraft auf das jeweilige Lager der Welle. In einer Ausführungsform dieser Druckschrift ist im Kraftfluss zwischen dem Aktor und dem Lager ein Sensor vorgesehen, der den tatsächlichen Wert der axialen Vorspannung misst und einem Regler zuführt, der den Messwert mit einem Sollwert vergleicht und den Aktor bei Abweichungen ansteuert.

Die Aufgabe der vorliegenden Erfindung besteht in der Bereitstellung eines Verfahrens und einer Vorrichtung zur Konditionierung von Lagersystemen für Wellen mit der Möglichkeit einer automatisierten Anpassung der Lagervorspannkräfte an den aktuellen Betriebszustand, wodurch die Einsatzbereiche, die Lebensdauer und die Toleranzbereiche der Welle für derart gestaltete Lagersysteme gegenüber dem Stand der Technik wesentlich verbessert werden. Unter "Konditionierung" wird in der vorliegenden Erfindung die Anpassung des Lagersystems einer Welle an die jeweiligen Betriebsbedingungen verstanden. Weiterhin sollen eine Verfahrensweise und eine Vorrichtung zur kontinuierlichen Überwachung und Diagnose der Betriebsparameter der Lagersysteme einschließlich der Einbindung in eine vorhandene Steuereinheit geschaffen werden, wodurch der Wartungs- und Kontrollaufwand sinkt.

Diese Aufgabe wird durch ein Verfahren gemäß den Merkmalen des Patentanspruchs 1 und durch eine Vorrichtung gemäß Anspruch 9 gelöst. Weiterhin sind vorteilhafte Ausführungen Gegenstand der Unteransprüche.

In einem erfindungsgemäßen Verfahren zur Konditionierung von Lagersystemen für Wellen wird zuerst die Antriebs- und Abtriebsseite bestimmt, wobei der Abtriebsseite die Wellennase mit einem Festlagersystem zugeordnet wird. Aus der Aufnahme der Drehmoment- und Drehzahlbereiche sowie der geometrischen Gegebenheiten der Welle und der Lagersysteme erfolgt die Festlegung für die geometrische Gestalt und die Einbaulage der Piezoelemente an den Lagerpaketen sowie die Vorgabe der Grundvorspannkraft der Lagerpakete. Diese Grundvorspannkraft wird mit Hilfe der Piezoelemente, welche im Sensorbetrieb arbeiten, eingestellt. Diese Einstellung der Grundvorspannkraft kann beispielsweise über federkraftbeaufschlagte Flansche oder durch Ausblocken mit Passblechen erfolgen, wodurch ein bestimmtes Übermaß zwischen Lagerinnen- und Lageraußenring erreicht wird. Aus den Toleranzvorgaben für den Wellenbetrieb werden die Anzahl und die Aufteilung der Piezoelemente an den Lagerpaketen bestimmt. In einer alternativen Ausführungsform ist auch der Einsatz von Piezoelementen in Zylinderform mit axialer Anordnung zur Wellenachse möglich. Darüber hinaus können auch geometrische Kombinationen von Sensor- und Aktorelementen als radiale oder axiale Ausführung sinnvolle Lösungen darstellen.

Weitere alternative Verfahrensausführungen sind **dadurch gekennzeichnet, dass** die Änderung der Lagervorspannung durch eine Spannungsveränderung an mindestens einem Piezoelement vorzugsweise am Festlager erfolgt und/oder die Feinpositionierung der Welle durch Änderung der Spannungswerte an mindestens einem Piezoelement, vorzugsweise am Loslager, durchgeführt wird.

Im nächsten Verfahrensschritt erfolgt die Ermittlung der von der Welle zu übertragenden Drehmoment- und Drehzahlwerte sowie die Aufnahme zusätzlicher Prozess- und/ oder Gewichtskräfte, welche an der Wellennase eingeleitet werden. Diesen ermittelten Parametersätzen werden abschließend noch Lagerpakettemperaturen zugeordnet. Anschließend werden diese Parametersätze verdichtet und im Ergebnis Lastkollektive gebildet, welche typische Einsatzbedingungen der Welle repräsentieren. Diesen Lastkollektiven werden Spannungswerte für die Piezoelemente zugeordnet und in einer Steuereinheit abgelegt. Diese Steuereinheit dient in einer vorteilhaften Ausgestaltung zur Ansteuerung der Betriebsparameter der Antriebseinheit der Welle.

Andere Ausführungsformen können vorhandene Steuereinheiten nutzen oder es ist für den Betrieb des erfindungsgemäßen Verfahrens eine eigene Steuereinheit vorzusehen.

Zusätzlich erfolgt die Definition der minimalen und maximalen Spannungswerte für die Piezoelemente entsprechend den gebildeten Lastkollektiven einschließlich deren Speicherung in der Steuereinheit. Im Rahmen des nächsten Verfahrensschrittes werden alle für den Betrieb der Welle erforderlichen Randbedingungen, wie beispielsweise die Anbringung von Einrichtungen an die Wellennase oder die axiale Verspannung einer Einrichtung an der Wellennase mit Hilfe einer Pinole, vorgenommen und die Piezoelemente erfassen im Sensorbetrieb diese eingestellten statischen Betriebsbedingungen an den Lagereinheiten und übertragen die ermittelten Werte an die Steuereinheit.

Im nächsten Verfahrensschritt dienen diese Betriebsbedingungen als Grundlage für die Steuereinheit, um das jeweils eingestellte Lastkollektiv zu ermitteln. Dazu werden die vorgegebenen Drehmoment - Drehzahlwerte aus der Ansteuerung des Antriebselementes bestimmt und/oder die Temperatur an den Lagerpaketen ermittelt und/ oder zusätzliche auf die Welle wirkende Kräfte durch die Piezoelemente im Sensorbetrieb ermittelt und daraus das jeweils aktuell einzustellende Lastkollektiv bestimmt. Auf dieser Grundlage erfolgt durch die Steuereinheit eine kontinuierliche Überwachung und Einstellung der Spannungswerte der Piezoelemente, wobei die Lage der einzustellenden Spannungswerte innerhalb einer definierten und lastkollektivabhängigen Bandbreite (minimaler und maximaler Wert) geprüft wird. Werden diese minimalen und maximalen Werte unterschritten oder überschritten, erzeugt die Steuereinheit einen Warnhinweis und/oder gibt ein Signal zur Abschaltung des Wellenbetriebs aus. Zur Sicherung eines störungsfreien Wellenbetriebes mit engen Betriebstoleranzen erfolgt erfindungsgemäß ein ständiger Betriebsartwechsel der Piezoelemente zwischen Sensor- und Aktorbetrieb. Dadurch wird auch das Schwingungsverhalten der Welle in der Weise überwacht, dass in der Steuereinheit kritische Werte für Schwingfrequenzbereiche abgelegt sind und die Steuereinheit bei Ermittlung von sich an diese Schwingfrequenzbereiche annähernden Parametern die Spannungswerte der Piezoelemente so verändert, dass die ermittelten Werte für die Schwingfrequenz sich wieder von den abgespeicherten kritischen Parametern entfernen.

In einer vorteilhaften Verfahrensausgestaltung wird ein bereitgestelltes Bearbeitungsprogramm, welches aus Befehlszeilen, die als Sätze bezeichnet werden, besteht, in die Steuereinheit eingelesen und die darin enthaltenen Steuerungsbefehle in der Art interpretiert, dass die darin vorgegebenen Werkzeugwechselbefehle eine Ansteuerung der Piezoelemente hervorrufen. Dies erfolgt auf der Grundlage einer satzweisen Überwachung der Stromaufnahme der Antriebseinheit vor der Befehlszeile zum Werkzeugwechsel. Mit Verringerung der Stromaufnahme der Antriebseinheit wird durch die Steuereinheit durch Spannungsänderung an den Piezoelementen die Lagervorspannung unter Beachtung der jeweiligen Lastkollektive erhöhend mitgeführt, um die Reibung in den Lagern zu vergrößern, damit eine Verkürzung der Abbremszeit der Welle eintritt. Die Regelgröße in Form des einzustellenden Sollwertes für die Lagervorspannung bildet dabei der lastkollektivabhängige Maximalwert für die Lagervorspannung, welcher gegebenenfalls auch um einen Verschleißfaktor durch die Steuereinheit vermindert werden kann. Nach durchgeführtem Werkzeugwechsel wird der Spindelhochlauf durch die Mitführung der Lagervorspannung mit minimalem Vorspannwert entsprechend dem zugehörigen Lastkollektiv bis zum Erreichen der Betriebsdrehzahl der Welle durch die Steuereinheit unterstützt.

In einer weiteren vorteilhaften Ausführungsform werden durch Temperatursensoren die Temperaturen an den Lagerpaketen durch die Steuereinheit erfasst und in Abhängigkeit dieser Temperaturwerte die eingestellten lastkollektivspezifischen Spannungswerte der Piezoelemente verändert.

Zur Verbesserung der erzielbaren Toleranzen beim Wellenbetrieb ist es möglich, dass die Steuereinheit in Abhängigkeit eines durch einen Drehwinkelgeber ermittelten Drehwinkel der Welle, die eingestellten lastkollektivspezifischen Spannungswerte der Piezoelemente so verändert, dass eine mögliche drehwinkelabhängige Verlagerung der Wellenachse und/oder des Rund- und/oder Planlaufes der Wellennase korrigiert werden.

Darüber hinaus ist es sinnvoll, die Position in z-Richtung der Wellennase durch einen Positionssensor kontinuierlich zu ermitteln und an die Steuereinheit zu übertragen.

Eine weitere mögliche Ausführungsform ist **dadurch gekennzeichnet, dass** in der Steuereinheit für wenigstens zwei lastkollektivabhängige Spannungswerte die zugehörigen Stromaufnahmewerte der Antriebseinheit gespeichert sind und in vorgegebenen Zeitabständen ein Selbsttest durch die Steuereinheit in der Art erfolgt, dass die gespeicherten Stromaufnahmewerte weniger als 10 Prozent von den jeweils ermittelten abweichen dürfen, anderenfalls erfolgt durch die Steuereinheit die Ausgabe eines Warnhinweises und/oder die Abschaltung des Wellenbetriebs.

Eine weitere alternative Verfahrensausgestaltung sieht vor, dass die Steuereinheit die Schmierstoffzufuhr zu den Lagereinheiten der Welle in Abhängigkeit der jeweiligen Lastkollektive verringert oder erhöht, um den Verschleiß auf ein Mindestmaß zu verringern.

Die vorliegende Erfindung zeichnet sich weiterhin dadurch aus, dass für die Druckeinstellung der Lagersteifigkeit keine Lagerbüchse, kein Stellelement und kein zusätzlicher Sensor erforderlich sind. Weiterhin arbeitet das erfindungsgemäße Verfahren eigenschwingungsfrei und durch das Piezoelement ist eine Echtzeitfähigkeit für eine prozessparallele Änderung der Lagersteifigkeit gegeben.

Die Erfindung wird nachfolgend anhand der Figuren näher erläutert. Es zeigen:
- Fig. 1: ein erstes Ausführungsbeispiel einer erfindungsgemäßen Vorrichtung,
- Fig. 2: den Ablauf der Informationsgewinnung, -verarbeitung und -ausgabe zur Konditionierung von Lagersystemen für Wellen gemäß einer bevorzugten Ausführungsform,
- Fig. 3: geometrische Angaben zur näheren Beschreibung eines Lagersystems,
- Fig. 4: ein Ausführungsbeispiel für den Einbau der Piezoelemente zur Veränderung der Lagervorspannung.

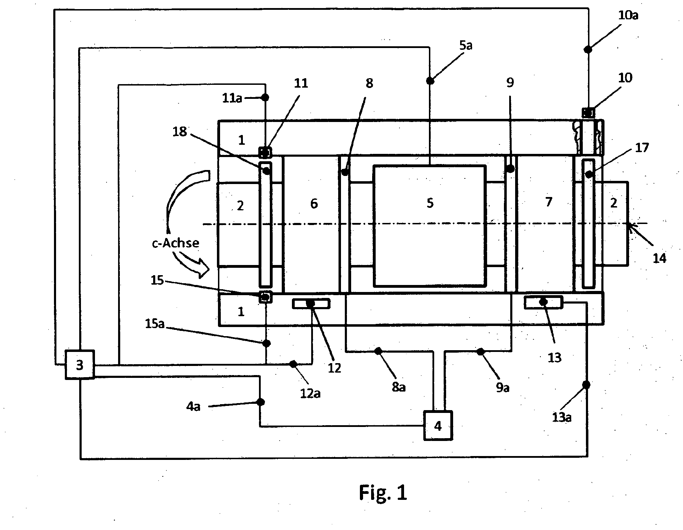

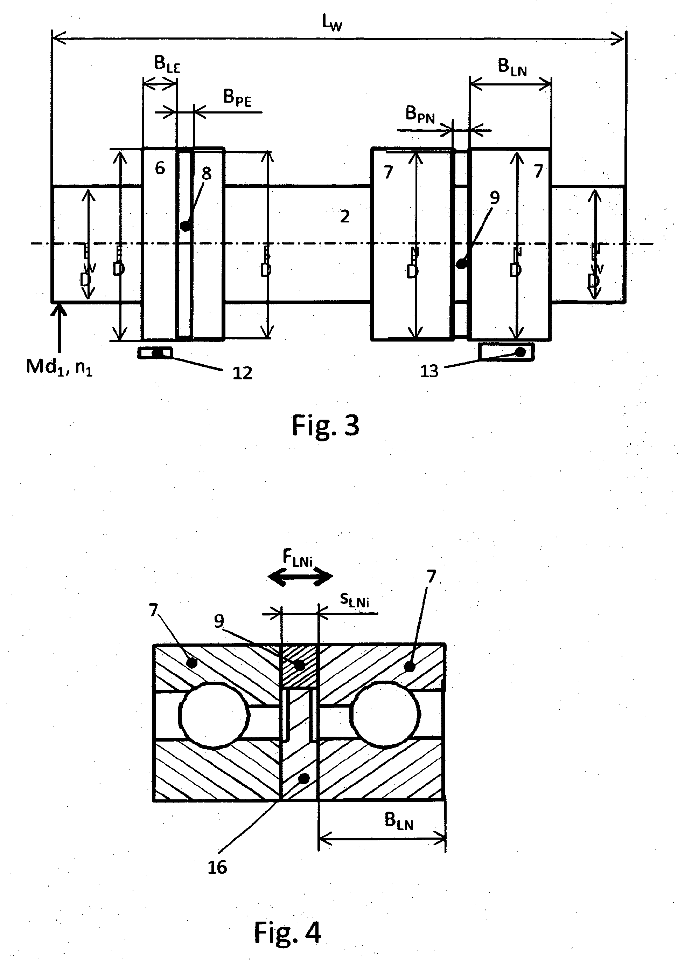

Figur 1 zeigt den Aufbau der erfindungsgemäßen Vorrichtung in einem ersten Ausführungsbeispiel. Die Welle (2) ist durch das Lagerpaket am Wellenende (6) und das Lagerpaket an der Spindelnase (7) drehbar in einem Gehäuse (1) gelagert. Auf die Welle (2) sind eine Gebereinheit für das Messsystem z-Achse (17), die Piezoelemente Wellennase (9), eine Antriebseinheit der Welle (5), Piezoelemente Wellenende (8) und eine Gebereinheit für das Messsystem c-Achse mit Drehzahlreferenz (18) montiert. Die Piezoelemente (9) Wellennase werden durch einen Distanzring (16, siehe Fig. 4) zum Lagerpaket (7) ausgerichtet. Im Gehäuse (1) befindet sich im Bereich der Gebereinheit für das Messsystem z-Achse (17) ein Durchbruch. Dieser ermöglicht dem Messkopf für das Messsystem z-Achse (10) die Datenerfassung. Die Halterung, an welcher der Messkopf für das Messsystem z-Achse (10) befestigt ist, wurde nicht dargestellt. Weiterhin sind im Gehäuse (1) ein Messkopf für das Messsystem c-Achse (11, 18), ein Messkopf der Drehzahlerfassungseinheit (15), ein Temperaturfühler Lagerpaket Wellenende (12) und ein Temperaturfühler Lagerpaket Wellennase (13) angebracht. Im Schnittpunkt der Wellensymmetrieachse mit der Begrenzungslinie der Wellenplanfläche an der Wellennase ist der Koordinatenursprung Werkstück (14) eingezeichnet. Die Steuereinheit (3) ist über die Verbindungsleitung (4a) mit dem Verstärker der Piezoelemente (4) verbunden. Der Verstärker der Piezoelemente (4) ist über die Verbindungsleitung (8a) mit den Piezoelementen Wellenende (8) sowie über die Verbindungsleitung (9a) mit den Piezoelementen Wellennase (9) verbunden. Die Steuereinheit (3) ist mit Hilfe der Verbindungsleitung (5a) mit der Antriebseinheit der Welle (5), der Verbindungsleitung (10a) mit dem Messkopf für das Messsystem z-Achse (10), der Verbindungsleitung (11a) mit dem Messkopf für das Messsystem c-Achse (11), der Verbindungsleitung (12a) mit dem Temperaturfühler Lagerpaket Wellenende (12), der Verbindungsleitung (13a) mit dem Temperaturfühler Lagerpaket Wellennase (13) und der Verbindungsleitung (15a) mit dem Messkopf der Drehzahlerfassungseinheit (15) verbunden.

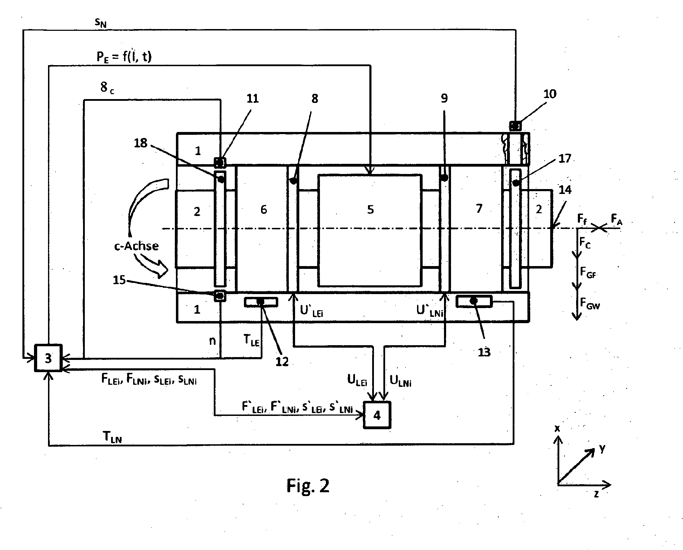

Aus Figur 2 wird die Verfahrensweise eines vorteilhaften erfindungsgemäßen Verfahrens zur Konditionierung von Lagersystemen für Wellen durch eine wie oben beschriebene Vorrichtung ersichtlich.

In Figur 3 werden beispielhaft wesentliche geometrische Abmessungen der Welle, des Lagersystems sowie der Piezoelemente dargestellt.

In Figur 4 erfolgt die Darstellung einer möglichen Einbauanordnung der Piezoelemente für ein Lagerpaket.

In einem erfindungsgemäßen Verfahren zur Konditionierung von Lagersystemen für Wellen wird zuerst die Antriebs- und Abtriebsseite bestimmt, wobei der Abtriebsseite die Wellennase mit einem Festlagersystem (7) zugeordnet wird. Aus der Aufnahme (vergleiche Fig. 3) der Drehmoment(Md₁)- und Drehzahlbereiche (n₁) sowie der geometrischen Gegebenheiten (bspw. L_{W}, D_{WLE}, D_{WLN}) der Welle (2) und der Lagersysteme 6 (B_{LE}, D_{LE}) und 7 (B_{LN}, D_{LN}) erfolgt die Festlegung für die geometrische Gestalt und die Einbaulage (radial) der Piezoelemente 8 (B_{PE}, D_{PE}) und 9 (B_{PN}, D_{PN}) an den Lagerpaketen (6, 7) sowie die Vorgabe der Grundvorspannkraft der Lagerpakete (6, 7). Diese Grundvorspannkraft wird mit Hilfe der Piezoelemente (8, 9), welche im Sensorbetrieb arbeiten, eingestellt. Aus den Toleranzvorgaben für den Wellenbetrieb werden die Anzahl und die Aufteilung der Piezoelemente (8, 9) an den Lagerpaketen (6, 7) bestimmt.

Im nächsten Verfahrensschritt erfolgt die Ermittlung der von der Welle (2) zu übertragenden Drehmoment- und Drehzahlwerte (Md₁ₘₐₓ, n₁ₘₐₓ) sowie die Aufnahme zusätzlicher Prozesskräfte (F_{f}, F_{A}, F_{C}) und Gewichtskräfte (F_{GF}, F_{GW}), welche an der Wellennase eingeleitet werden. Diesen ermittelten Parametersätzen werden abschließend noch Lagerpakettemperaturen (T_{LE}, T_{LN}) zugeordnet. Anschließend werden diese Parametersätze verdichtet und im Ergebnis Lastkollektive gebildet, welche typische Einsatzbedingungen der Welle (2) repräsentieren. Diesen Lastkollektiven werden Spannungswerte (U'_{LEi}, U'_{LNi}) für die Piezoelemente (8, 9) zugeordnet und in einer Steuereinheit (3) abgelegt. Diese Steuereinheit (3) dient in einer vorteilhaften Ausgestaltung zur Ansteuerung der Betriebsparameter (P_{E} = f(I, t)) der Antriebseinheit (5) der Welle (2).

Zusätzlich erfolgt die Definition der minimalen (U_{LEimin}, U_{LNimin}) und maximalen (U_{LEimax}, U_{LNimax}) Spannungswerte für die Piezoelemente (8, 9) entsprechend den gebildeten Lastkollektiven einschließlich deren Speicherung in der Steuereinheit (3). Im Rahmen des nächsten Verfahrensschrittes werden alle für den Betrieb der Welle (2) erforderlichen Randbedingungen, wie beispielsweise die Anbringung von Einrichtungen an die Wellennase oder die axiale Verspannung einer Einrichtung an der Wellennase mit Hilfe einer Pinole (nicht in Fig. 2 dargestellt), vorgenommen und die Piezoelemente (8, 9) erfassen im Sensorbetrieb diese eingestellten statischen Betriebsbedingungen an den Lagereinheiten (6, 7) und übertragen die ermittelten Werte (F_{LEi}, S_{LEi}, F_{LNi}, S_{LNi}) an die Steuereinheit (3).

Im nächsten Verfahrensschritt dienen diese Betriebsbedingungen als Grundlage für die Steuereinheit (3), um das jeweils eingestellte Lastkollektiv zu ermitteln. Dazu werden die vorgegebenen Drehmomentwerte (Md₁ ∼ I) und Drehzahlwerte (15) ausder Ansteuerung des Antriebselementes (5) bestimmt (P_{E} = f(I, t)) und die Temperaturen (T_{LE}, T_{LN}) an den Lagerpaketen (6, 7) ermittelt und zusätzliche auf die Welle (2) wirkende Kräfte (F_{f}, F_{A}, F_{C}, F_{GF}, F_{GW}) durch die Piezoelemente (8, 9) im Sensorbetrieb ermittelt und daraus das jeweils aktuell einzustellende Lastkollektiv bestimmt. Zur Verstärkung der von den Piezoelementen (8, 9) aufgenommenen oder abgegebenen Spannungen wird ein Verstärker (4) in die Leitungsverbindung (4a) zur Steuereinheit (3) eingebunden. Zusätzlich erfolgt durch den Verstärker (4) eine Signalwandlung, aus den Spannungssignalen (U_{LEi}, U_{LNi}) der Piezoelemente (8, 9) werden Kraftsignale (F_{LEi}, F_{LNi}) und Wegsignale (S_{LEi}, S_{LNi}) für die Steuereinheit (3) gebildet. Aus den einzustellenden Kraftsignalen (F'_{LEi}, F'_{LNi}) und Wegsignalen (S'_{LEi}, S'_{LNi}) der Steuereinheit (3) werden durch den Verstärker (4) der Piezoelemente (8, 9) einzustellende Spannungswerte (U'_{LEi}, U'_{LNi}) gebildet. Auf dieser Grundlage erfolgt durch die Steuereinheit (3) eine kontinuierliche Überwachung (U_{LEi}, U_{LNi}) und Einstellung der Spannungswerte (U'_{LEi}, U'_{LNi}) der Piezoelemente (8, 9), wobei die Lage der einzustellenden Spannungswerte innerhalb einer definierten und lastkollektivabhängigen Bandbreite ((U_{LEmin} < U_{LEi} < U_{LEimax}), (U_{LNimin} < U_{LNi} < U_{LNimax})) geprüft wird. Werden diese minimalen und maximalen Werte unterschritten oder überschritten, erzeugt die Steuereinheit (3) einen Warnhinweis oder gibt ein Signal zur Abschaltung des Wellenbetriebs (P_{E} = 0) aus. Zur Sicherung eines störungsfreien Wellenbetriebes mit engen Betriebstoleranzen erfolgt ein ständiger Betriebsartwechsel der Piezoelemente (8, 9) zwischen Sensor- und Aktorbetrieb. Dadurch wird auch das Schwingungsverhalten der Welle (2) in der Weise überwacht, dass in der Steuereinheit (3) kritische Werte für Schwingfrequenzbereiche abgelegt sind und die Steuereinheit (3) bei Ermittlung von sich an diese Schwingfrequenzbereiche annähernden Parametern die Spannungswerte (U_{LEi}, U_{LNi}) der Piezoelemente (8, 9) so verändert, dass die ermittelten Werte für die Schwingfrequenz sich wieder von den abgespeicherten kritischen Parametern entfernen.

Durch Temperatursensoren (12, 13) werden die Temperaturen (T_{LE}, T_{LN}) an den Lagerpaketen (6, 7) durch die Steuereinheit (3) erfasst und in Abhängigkeit dieser Temperaturwerte (T_{LE}, T_{LN}) die eingestellten lastkollektivspezifischen Spannungswerte (U'_{LEi}, U'_{LNi}) der Piezoelemente (8, 9) verändert.

Die Steuereinheit (3) ermittelt in Abhängigkeit eines durch einen Drehwinkelgeber (11, 18) gemessenen Drehwinkels (□_{C}) der Welle (2) sowie der eingestellten lastkollektivspezifischen Spannungswerte (U'_{LEi}, U'_{LNi}) der Piezoelemente (8, 9) eine drehwinkelabhängige Verlagerung der Wellenachse sowie des Rund- und Planlaufes der Wellennase und korrigiert die Ausrichtung der Wellennase durch Änderung der lastkollektivspezifischen Spannungswerte (U'_{LEi}, U'_{LNi}) der Piezoelemente (8, 9).

Die Position in z-Richtung (S_{N}) der Wellennase wird durch einen Positionssensor (10, 17) kontinuierlich ermittelt und an die Steuereinheit (3) übertragen.

### Bezugszeichenliste

- 1: Gehäuse
- 2: Welle
- 3: Steuereinheit
- 4: Verstärker der Piezoelemente
- 4a: Verbindungsleitung Steuereinheit - Verstärker der Piezoelemente
- 5: Antriebseinheit der Welle
- 5a: Verbindungsleitung Steuereinheit - Antriebseinheit der Welle
- 6: Lagerpaket Wellenende
- 7: Lagerpaket Wellennase
- 8: Piezoelemente Wellenende
- 8a: Verbindungsleitung Piezoelemente Wellenende - Verstärker der Piezoelemente
- 9: Piezoelemente Wellennase
- 9a: Verbindungsleitung Piezoelemente Wellennase - Verstärker der Piezoelemente
- 10: Messkopf Messsystem z-Achse
- 10a: Verbindungsleitung Steuereinheit - Messkopf Messsystem z-Achse
- 11: Messkopf Messsystem c-Achse
- 11a: Verbindungsleitung Steuereinheit - Messkopf Messsystem c-Achse
- 12: Temperaturfühler Lagerpaket Wellenende
- 12a: Verbindungsleitung Steuereinheit - Temperaturfühler Lagerpaket Wellenende
- 13: Temperaturfühler Lagerpaket Wellennase
- 13a: Verbindungsleitung Steuereinheit - Temperaturfühler Lagerpaket Wellennase
- 14: Koordinatenursprung Werkstück
- 15: Messkopf Drehzahlerfassungseinheit
- 16: Distanzring
- 17: Gebereinheit Messsystem z-Achse
- 18: Gebereinheit Messsystem c-Achse und Drehzahlreferenz
- S_{N}: Positionswert der Wellennase in der z-Achse
- L_{W}: Länge der Welle
- D_{WLE}: Durchmesser der Welle am Lagersitz Wellenende
- D_{WLN}: Durchmesser der Welle am Lagersitz Wellennase
- D_{LE}: Durchmesser der Lager am Wellenende
- B_{LE}: Breite der Lager am Wellenende
- D_{LN}: Durchmesser der Lager an der Wellennase
- B_{LN}: Breite der Lager an der Wellennase
- D_{PE}: Durchmesser der Piezoeinheit am Wellenende
- B_{PE}: Breite der Piezoeinheit am Wellenende
- D_{PN}: Durchmesser der Piezoeinheit am Wellennase
- B_{PN}: Breite der Piezoeinheit am Wellennase
- Md₁: Eingangsdrehmoment
- n₁: Eingangsdrehzahl
- S_{LE}: Resultierender Weg der Piezoelemente Wellenende
- S_{LEi}: Weg eines Piezoelementes Wellenende
- S'_{LE}: Einzustellender resultierender Weg der Piezoelemente Wellenende
- S'_{LEi}: Einzustellender Weg eines Piezoelementes Wellenende
- S_{LN}: Resultierender Weg der Piezoelemente Wellennase
- S_{LNi}: Weg eines Piezoelementes Wellennase
- S'_{LN}: Einzustellender resultierender Weg der Piezoelemente Wellennase
- S'_{LNi}: Einzustellender Weg eines Piezoelementes Wellennase
- P_{E}: Eingestellte elektrische Leistung der Antriebseinheit der Welle
- F_{LE}: Resultierende Kraft der Piezoelemente Wellenende
- F_{LEi}: Kraft eines Piezoelementes am Wellenende
- F'_{LE}: Einzustellende resultierender Kraft der Piezoelemente Wellenende
- F'_{LEi}: Einzustellende Kraft eines Piezoelementes Wellenende
- F_{LN}: Resultierende Kraft der Piezoelemente Wellennase
- F_{LNi}: Kraft eines Piezoelementes an der Wellennase
- F'_{LN}: Einzustellender resultierender Weg der Piezoelemente Wellennase
- F'_{LNi}: Einzustellender Weg eines Piezoelementes Wellennase
- l: Stromstärke
- t: Zeit
- n: Wellendrehzahl
- □_{C}: Winkelposition der c-Achse
- T_{LE}: Temperatur Lagerpaket Wellenende
- T_{LN}: Temperatur Lagerpaket Wellennase
- U_{LEi}: Spannung eines Piezoelementes Wellenende
- U'_{LEi}: Einzustellende Spannung für ein Piezoelement Wellenende
- U_{LNi}: Spannung eines Piezoelementes Wellennase
- U'_{LNi}: Einzustellende Spannung für ein Piezoelement Wellennase
- F_{f}: Vorschubkraft
- F_{A}: Zur Werkstückspannung eingestellte Axialkraft
- F_{C}: Schnittkraft
- F_{GF}: Gewichtskraft des Futters
- F_{GW}: Gewichtskraft des Werkstückes

## Patentansprüche

1. Verfahren zur Konditionierung von Lagersystemen für Wellen, wobei die Welle von einer Festlagereinheit und einer Loslagereinheit aufgenommen wird und über eine Steuereinheit das durch die Welle zu übertragende Drehmoment sowie die Drehzahl variabel eingestellt werden kann, **dadurch gekennzeichnet,**
**dass** die Abmessungen der Welle und der Lagereinheiten an der Wellennase und am Wellenende bestimmt, die Drehmoment-Drehzahlbereiche festgelegt und daraus die geometrische Gestalt und die Einbaulage der Piezoelemente an den Lagerpaketen sowie die Grundvorspannkraft der Lagerpakete bestimmt werden sowie aus den Toleranzvorgaben für den Wellenbetrieb die Anzahl und die Aufteilung der Piezoelemente an den Lagerpaketen bestimmt wird und dass während des Wellenbetriebes ein ständiger Wechsel der Piezoelemente zwischen Sensor- und Aktabetrieb erfolgt und dadurch das Schwingungsverhalten der Welle überwacht wird.

2. Verfahren nach Anspruch 1 **dadurch gekennzeichnet,**
**dass** aus den vorgegebenen Drehmoment- und Drehzahlwerten und/oder zusätzlichen Prozess- und/oder Gewichtskräften und/oder Lagerpakettemperaturen Lastkollektive gebildet werden und für diese Lastkollektive Spannungswerte für die Piezoelemente bestimmt und in der Steuereinheit abgelegt werden sowie minimale und maximale Spannungswerte für die Piezoelemente in der Steuereinheit gespeichert werden und/oder kontinuierlich die Position in z-Richtung der Wellennase durch einen Positionssensor ermittelt und an die Steuereinheit übertragen wird.

3. Verfahren nach Anspruch 2 **dadurch gekennzeichnet,**
**dass** die Bestimmung des jeweiligen Lastkollektives derart durch die Steuereinheit erfolgt, dass zuerst die Betriebsbedingungen ermittelt, danach die vorgegebenen Drehmoment-Drehzahlwerte aus der Ansteuerung des Antriebselementes bestimmt und/oder die Temperatur an den Lagerpaketen ermittelt und/oder zusätzliche auf die Welle wirkende Kräfte zugeordnet werden und daraus das jeweils aktuell einzustellende Lastkollektiv bestimmt wird und/oder vor dem Betrieb der Welle die Piezoelemente als Sensoren die eingestellten statischen Betriebsbedingungen an den Lagereinheiten erfassen und an die Steuereinheit übertragen.

4. Verfahren nach Anspruch 3 **dadurch gekennzeichnet,**
**dass** in der Steuereinheit für wenigstens zwei lastkollektivabhängige Spannungswerte die zugehörigen Stromaufnahmewerte der Antriebseinheit gespeichert sind und in vorgegebenen Zeitabständen ein Selbsttest durch die Steuereinheit in der Art erfolgt, dass die gespeicherten Stromaufnahmewerte weniger als 10 Prozent von den jeweils ermittelten abweichen dürfen, anderenfalls erfolgt durch die Steuereinheit die Ausgabe eines Wamhinweises und/oder die Abschaltung des Wellenbetriebs.

5. Verfahren nach Anspruch 4 **dadurch gekennzeichnet,**
**dass** ein bereitgestelltes Bearbeitungsprogramm in die Steuereinheit eingelesen und die erithaltenen Steuerungs befehle von dieser in der Art interpretiert werden, dass die darin vorgegebenen Werkzeugwechselbefehle eine Ansteuerung der Piezoelemente hervorrufen, wobei eine satzweise Überwachung der Stromaufnahme der Antriebseinheit vor der Befehlszeile zum Werkzeugwechsel durch die Steuereinheit erfolgt und mit Verringerung der Stromaufnahme der Antriebseinheit die Steuereinheit durch Spannungsänderung an den Piezoelementen die Lagervorspannung unter Beachtung der jeweiligen Lastkollektive in der Art mitführt, dass vor dem Werkzeugwechsel die Lagervorspannung bis zu einem lastkollektivabhängigen Maximalwert erhöht wird und/oder nach erfolgtem Werkzeugwechsel die Steuereinheit den lastkollektivabhängigen minimalen Lagervorspannungswert bis zum Erreichen der Enddrehzahl der Welle einstellt.

6. Verfahren nach Anspruch 4 **dadurch gekennzeichnet,**
**dass** die Änderung der Lagervorspannung durch eine Spannungsveränderung an mindestens einem Piezoelement, vorzugsweise am Festlager, erfolgt und/oder die Feinpositionierung der Welle durch Änderung der Spannungswerte an mindestens einem Piezoelement, vorzugsweise am Loslager, erfolgt und/oder die Steuereinheit die Schmierstoffzufuhr zu den Lagerpaketen der Welle in Abhängigkeit der jeweiligen Lastkollektive verringert oder erhöht und/oder die Steuereinheit die Spannungswerte für die Piezoelemente in Abhängigkeit der jeweils vorliegenden Lastkollektive und innerhalb der vorgegebenen Bandbreite zwischen minimalem und maximalem S,pannungswert einstellt.

7. Verfahren nach Anspruch 6 **dadurch gekennzeichnet. dass** bei Annäherung an eine in der Steuereinheit abgelegte Schwingfrequenz die Spannungswerte der Piezoelemente durch die Steuereinheit so verändert werden, dass die ermittelten Werte für die Schwingfrequenz außerhalb des in der Steuereinheit gespeicherten Schwingfrequenzbereiches liegen.

8. Verfahren nach Anspruch 6 **dadurch gekennzeichnet,**
**dass** durch Temperatursensoren die Temperaturen an den Lagerpaketen durch die Steuereinheit erfasst und in Abhängigkeit dieser Temperaturwerte die eingestellten lastkollektivspezifischen Spannungswerte der Piezoelemente verändert und/oder die Steuereinheit in Abhängigkeit eines durch einen Drehwinkelgeber ermittelten Drehwinkel der Welle die eingestellten lastkollektivspezifischen Spannungswerte der Piezoelemente verändert werden und/oder bei Unterschreiten oder Überschreiten der vorgegebenen Bandbreite der einzustellenden Spannungswerte der Piezoelemente die Steuereinheit einen Wamhinweis und/oder eine Abschaltung des Wellenbetriebs vornimmt.

9. Vorrichtung zur Konditionierung von Lagersystemen für Wellen, wobei die Welle von einer Festlagereinheit und einer Loslagereinheit aufgenommen wird und über eine Steuereinheit das durch die Welle zu übertragende Drehmoment sowie die Drehzahl variabel eingestellt werden kann, **dadurch gekennzeichnet,**
**dass** auf einer Welle (2) die Piezoelemente Wellennase (9), eine Antriebseinheit der Welle (5), die Piezoelemente Wellenende (8), eine Gebereinheit für das Messsystem c-Achse mit Drehzahlreferenz (18) montiert sind, wobei die Piezoelemente (9) Wellennase von einem Distanzring (16) aufgenommen werden, im Gehäuse (1) ein Messkopf für das Messsystem c-Achse (11, 18) und ein Messkopf der Drehzahlerfassungseinheit (15) angeordnet sind sowie sich Temperaturfühler am Lagerpaket Wellenende (12) und am Lagerpaket Wellen nase (13) befinden und die Steuereinheit (3) über die Verbindungsleitung (4a) mit dem Verstärker der Piezoelemente (4) verbunden ist, und wobei die Betriebsart der Piezoelemente (8, 9) zwischen Sensor- und Aktorbetrieb wechselbar ist.

10. Vorrichtung nach Anspruch 9 **dadurch gekennzeichnet, dass** sich eine Gebereinheit für das Messsystem z-Achse (17) im Gehäuse (1) befindet und im Bereich der Gebereinheit für das Messsystem z-Achse (17) ein Gehäusedurchbruch eingebracht ist und/oder die Piezoelemente Wellennase (9) zylinderförmig ausgebildet sind und axial auf eine federbelastete Druckplatte wirken.

## Claims

1. A method for conditioning bearing systems for shafts, wherein the shaft is received in both a fixed bearing unit and a non-locating bearing unit and where through a control unit the shaft torque and the rotational speed can be variably set, **characterized in that** the dimensions of the shaft and the dimensions of the bearing units on both the shaft nose and the shaft end are determined, the torque - speed ranges are defined and whereof the resulting geometric shape and the mounting position of the piezo elements at the bearing packages as well as the basic preload force of the bearing packages are determined while the number and segmentation of the piezo elements at the bearing packages is determined from the given tolerances for the shaft operation and while during shaft operation the function of the piezo elements continuously changes between sensor and actuator operation whereby the vibration behavior of the shaft is monitored.

2. A method according to claim 1, **characterized in that** - from the preset torque and speed values and / or additional process and / or weight forces and / or bearing unit temperatures - load spectra are formed and voltage values for the piezo elements are determined for these load spectra and stored in the control unit as well as minimum and maximum voltage values for the piezo elements are stored in the control unit and / or the position of the shaft nose in z-direction is continuously determined by a position sensor and transmitted to the control unit.

3. A method according to claim 2, **characterized in that** the respective load spectrum is determined by the control unit in such a manner that first the operating conditions are determined and thereafter the given torque - speed values are determined from the control of the drive unit and / or the temperature at the bearing packets is determined and / or additional forces acting on the shaft are being assigned and from this the respective load spectrum to be currently set is determined and / or prior to operation of the shaft, the piezo elements are used as sensors to detect the static operation conditions of the bearing units and to transfer these conditions to the control unit.

4. A method according to claim 3, **characterized in that** for at least two load spectrum dependent voltage values the associated power consumption values of the drive unit are stored in the control unit, and a self-test is performed by the control unit in such a manner that at predetermined time intervals the stored power consumption values may only differ by less than 10 percent from the respective actual values, otherwise the output of a warning and / or the shutdown of the shaft operation is carried out by the control unit.

5. A method according to claim 4, **characterized in that** provided program code is read into the control unit and the control commands contained are interpreted such that prescribed tool change commands cause a triggering of the piezo elements where the power consumption of the drive unit is monitored record-by-record before carrying out the command line for the tool change by the control unit and with reduction in power consumption of the drive unit, the bearing preload force is adjusted by the control unit through voltage change at the piezo elements in compliance with the respective load spectrum in a way that before tool change, the bearing preload force is increased up to a load spectrum dependent maximum value and / or after tool change the load spectrum dependent minimal bearing preload force is set by the control unit prior to reaching the final speed of the shaft.

6. A method according to claim 4, **characterized in that** the change of the preload force of the bearing is caused by a voltage change on at least one piezo element, preferably on the fixed bearing, and / or the change of the fine positioning of the shaft is caused by a voltage change on at least one piezo element, preferably on the non-locating bearing, is carried and / or the control unit regulates the lubricant supply to the bearing packets depending on the respective load spectra and / or the control unit adjusts the voltage values for the piezo elements as a function of the respective actual load spectra and within the specified range between minimum and maximum voltage value.

7. A method according to claim 6, **characterized in that** approaching a resonant frequency stored in the control unit, the voltage of the piezo elements will be changed by the control unit such that the determined values for the resonant frequency is outside the vibration frequency range stored in the control unit.

8. A method according to claim 6, **characterized in that** the temperatures at the bearing packets are recorded by the control unit through temperature sensors and that as a function of these temperature values the load spectrum specific voltages of the piezo elements are changed and / or the control unit changes the load spectrum specific voltages of the piezo elements as a function of the angular position of the shaft detected by a rotary encoder and / or the control unit issues a warning and / or causes a shutdown of the shaft operation whenever the adjusted voltage values of the piezo elements are outside a given bandwidth.

9. An apparatus for conditioning the bearing systems for shafts, **characterized in that** the piezo elements of the shaft nose (9), a drive unit of the shaft (5), the piezo elements of the shaft end (8), and a sensor unit for measuring c-axis and speed reference (18) are mounted on a shaft (2), where the mentioned piezo elements of the shaft nose (9) are contained in a spacer ring (16), the housing (1) holds a probe for measuring c-axis (11, 18) and a sensor head for speed detection (15), temperature sensors are located on the bearing packets of the shaft end (12) and the bearing packets of the shaft nose (13), and the control unit (3) is connected to the amplifier of the piezo elements (4) via the connecting line (4a), and wherein the operation of the piezo elements (8, 9) can be changed between sensor and actuator operation.

10. An apparatus according to claim 9, **characterized in that** a sensor unit for the measurement system z-axis (17) is located in the housing (1) and that an opening in the housing is located close by the transmitter unit for the measurement system z-axis (17) and / or piezo elements of the shaft nose (9) are of cylindrical shape and act axially on a spring-loaded pressure plate.

## Revendications

1. Procédé de conditionnement de systèmes de paliers pour arbres, l'arbre étant logé par une unité de palier fixe et une unité de palier libre et le moment du couple à transmettre au moyen de l'arbre par l'intermédiaire d'une unité de commande ainsi que la vitesse pouvant être réglés de manière variable, **caractérisé en ce que** les dimensions de l'arbre et des unités de paliers sont déterminées sur l'ergot de l'arbre et sur le bout d'arbre, **en ce que** les plages de la vitesse - du moment du couple sont fixées et **en ce qu'**à partir de celles-ci, la forme géométrique et la position d'installation des éléments piézoélectriques sur les ensembles de paliers ainsi que la force de base de précontrainte des ensembles de paliers sont déterminées, et **en ce que** le nombre et la répartition des éléments piézoélectriques sur les ensembles de paliers sont déterminés à partir des tolérances prédéfinies pour le fonctionnement de l'arbre et **en ce que** pendant le fonctionnement de l'arbre, une alternance constante des éléments piézoélectriques entre fonctionnement par capteur et fonctionnement par acteur est réalisée et **en ce que** le comportement d'oscillation de l'arbre en est ainsi contrôlé.

2. Procédé selon la revendication 1, **caractérisé en ce qu'**à partir des valeurs prédéfinies du moment du couple et de la vitesse et/ou des forces de processus et/ou de poids supplémentaires et/ou des températures des ensembles de paliers, des spectres de charge sont formés, et **en ce que** pour ces spectres de charge, des valeurs de tension sont déterminées pour les éléments piézoélectriques et sont mémorisées dans l'unité de commande et **en ce que** des valeurs de tension minimales et maximales sont mémorisées dans l'unité de commande pour les éléments piézoélectriques et/ou **en ce que** la position en direction z de l'ergot d'arbre est détectée de manière continue au moyen d'un capteur de position et est transmise à l'unité de commande.

3. Procédé selon la revendication 2, **caractérisé en ce que** la détermination du spectre de charge respectif est réalisée au moyen de l'unité de commande de manière à ce que d'abord les conditions de fonctionnement soient détectées, qu'ensuite les valeurs prédéfinies du couple du moment - de la vitesse soient déterminées à partir de la commande de l'élément d'entraînement et/ou que la température sur les ensembles de paliers soit détectée et/ou que des forces supplémentaires agissant sur l'arbre leur soient attribuées et qu'à partir de celles-ci, le spectre de charge à régler respectivement momentanément soit déterminé et/ou qu'avant le fonctionnement de l'arbre, les éléments piézoélectriques, en tant que capteurs, enregistrent les conditions de fonctionnement statiques réglées sur les unités de paliers et les transmettent à l'unité de commande.

4. Procédé selon la revendication 3, **caractérisé en ce que** dans l'unité de commande, les valeurs de la consommation de courant de l'unité d'entraînement sont mémorisées de manière correspondante pour au moins deux valeurs de tension dépendant du spectre de charge et **en ce que**, à des intervalles de temps prédéfinis, un autotest est réalisé par l'unité de commande de manière à ce que les valeurs mémorisées de la consommation de courant ne doivent varier que de moins de 10 pour cent des celles respectivement détectées, sinon l'unité de commande émet un avertissement et/ou interrompt le fonctionnement de l'arbre.

5. Procédé selon la revendication 4, **caractérisé en ce qu'**un programme de traitement fourni est entré dans l'unité de commande et **en ce que** les instructions de commande contenues sont interprétés par elle de manière à ce que les instructions de changement d'outil qui y sont prédéfinies entraînent une commande des éléments piézoélectriques, un contrôle par jeu de la consommation de courant de l'unité d'entraînement étant réalisé par l'unité de commande avant la ligne d'instruction pour le changement d'outil, et l'unité de commande, lors de la diminution de la consommation de courant de l'unité d'entraînement, entraînant la précontrainte des paliers par modification de la tension sur les éléments piézoélectriques, avec surveillance des spectres de charge respectifs, de manière à ce qu'avant le changement d'outil, la précontrainte des paliers soit augmentée jusqu'à une valeur maximale dépendant du spectre de charge et/ou qu'après la réalisation du changement d'outil, l'unité de commande règle la valeur minimale de précontrainte des paliers, dépendant du spectre de charge, jusqu'à obtention de la vitesse finale de l'arbre.

6. Procédé selon la revendication 4, **caractérisé en ce que** la modification de la précontrainte des paliers est réalisée par une modification de tension sur au moins un élément piézoélectrique, de préférence sur le palier fixe, et/ou **en ce que** le positionnement de précision de l'arbre est réalisé par modification des valeurs de tension sur au moins un élément piézoélectrique, de préférence sur le palier libre, et/ou **en ce que** l'unité de commande réduit ou augmente l'alimentation en lubrifiant vers les ensembles de paliers de l'arbre en fonction du spectre de charge respectif et/ou **en ce que** l'unité de commande règle les valeurs de tension pour les éléments piézoélectriques en fonction des spectres de charges respectivement présents et entre la valeur de tension minimale et la valeur de tension maximale comprises dans la gamme prédéfinie.

7. Procédé selon la revendication 6, **caractérisé en ce que** lors de l'approximation d'une fréquence d'oscillation mémorisée dans l'unité de commande, les valeurs de tension des éléments piézoélectriques sont modifiées par l'unité de commande de manière à ce que les valeurs détectées pour la fréquence d'oscillation soient situées en dehors de la plage de fréquence d'oscillation mémorisée dans l'unité de commande.

8. Procédé selon la revendication 6, **caractérisé en ce que** les températures sur les ensembles de paliers sont enregistrées par l'unité de commande au moyen de capteurs de température et **en ce qu'**en fonction de ces valeurs de température, les valeurs de tension réglées des éléments piézoélectriques, spécifiques au spectre de charge, sont modifiées et/ou **en ce qu'**en fonction d'un angle de rotation de l'arbre, détecté par un capteur d'angle de rotation, l'unité de commande modifie les valeurs de tension réglées des éléments piézoélectriques, spécifiques au spectre de charge, et/ou **en ce qu'**en cas de dépassement négatif ou de dépassement de la plage prédéfinie des valeurs de tension à régler, l'unité de commande effectue un avertissement et/ou une interruption du fonctionnement de l'arbre.

9. Dispositif destiné au conditionnement de systèmes de paliers pour arbres, **caractérisé en ce que** sur un arbre (2) sont montés les éléments piézoélectriques ergot d'arbre (9), une unité d'entraînement de l'arbre (5), les éléments piézoélectriques bout d'arbre (8), une unité de transmission pour le système de mesure axe c avec référence de vitesse (18), les éléments piézoélectriques ergot d'arbre (9) étant logés par une bague d'espacement (16), une tête de mesure pour le système de mesure axe c (11, 18) et une tête de mesure de l'unité de détection de vitesse (15) étant disposées dans le carter (1) ainsi que des capteurs de températures se trouvant sur l'ensemble de paliers bout d'arbre (12) et sur l'ensemble de palier ergot d'arbre (13) et l'unité de commande (3) étant reliée à l'amplificateur des éléments piézoélectriques (4) par l'intermédiaire de la ligne de liaison (4a), et le mode de fonctionnement des éléments piézoélectriques (8, 9) pouvant alterner entre fonctionnement par capteur et fonctionnement par acteur.

10. Dispositif selon la revendication 9, **caractérisé en ce qu'**une unité de transmission pour le système de mesure axe z (17) se trouve dans le carter (1) et **en ce qu'**un passage dans le carter est placé dans la zone de l'unité de transmission pour le système de mesure axe z (17) et/ou **en ce que** les éléments piézoélectriques ergot d'arbre (9) sont réalisés de manière cylindrique et agissent axialement sur une plaque de butée contrainte par ressort.
